# FASCICULE DE BREVET EUROPEEN

(11) **EP 1 316 874 B1**
(45) Date de publication et mention de la délivrance du brevet: **16.07.2008**
(21) Numéro de dépôt: 02354187.3
(22) Date de dépôt: 27.11.2002
(51) Int. Cl.: G06F 21/02

(54) **Blocage du fonctionnement d'un circuit intégré**
Sperrung der Funktion in einer integrierten Schaltung
Freezing of functioning in an integrated circuit

(30) Priorité: 28.11.2001 FR 0115361
(43) Date de publication de la demande: 04.06.2003
(73) Titulaire: STMicroelectronics S.A., 92120 Montrouge (FR)
(72) Inventeur: Liardet, Pierre-Yvan, 13790 Peynier (FR)
(74) Mandataire: de Beaumont, Michel

(56) Documents cités:
- US-A- 5 249 294
- US-A- 5 944 833

## Description

La présente invention concerne la sécurité des circuits intégrés contre d'éventuels piratages et, plus particulièrement, le blocage du fonctionnement normal d'un circuit intégré en cas de tentative de violation de la mémoire de celui-ci.

Un exemple d'application de la présente invention concerne les cartes à puce dans lesquelles une ou plusieurs puces de circuit intégré exécutent des fonctions que l'on souhaite garder secrètes et/ou utilisent des données secrètes.

Dans ce genre d'application, et plus généralement dans toute application ayant recours à un circuit intégré mettant en oeuvre un algorithme et/ou des données secrètes, il n'est pas rare que les circuits intégrés subissent des tentatives de piratages de la part d'utilisateurs indélicats dont le but est d'en percer le secret. Dans le cas de l'exécution de programmes, il s'agit généralement de déterminer les algorithmes de codage ou de cryptage de données. Dans le cas d'une clé ou quantité secrète contenue dans le circuit intégré, il s'agit de détecter la donnée correspondante.

Les tentatives de piratages des quantités secrètes des circuits intégrés sont généralement appelées des "attaques". On connaît principalement deux types d'attaques. Une première attaque consiste à analyser la consommation du circuit intégré pendant l'exécution d'un algorithme par le circuit. L'attaque peut être par analyse directe (Simple Power Analysis, SPA) ou statistique (Differential Power Analysis, DPA) de la consommation. Une telle attaque consiste à évaluer la dépendance directe ou statistique entre la consommation du circuit et l'utilisation de données numériques traitées par une puce de ce circuit et faisant intervenir une quantité secrète. En effet, dans un traitement algorithmique au moyen d'un circuit de traitement, il existe une dépendance entre la consommation du circuit et la donnée traitée. Le pirate utilise la ou les données introduites dans le circuit, donc "visibles", et utilisées par l'algorithme, afin de déterminer la donnée secrète enfouie dans le circuit.

Une deuxième catégorie d'attaques concerne les attaques par analyse statistique de fautes (Differential Fault Analysis, DFA). De telles attaques consistent à provoquer des fautes ou erreurs dans le déroulement d'un algorithme traité par le circuit intégré pour en extraire les informations secrètes.

Les cartes à puce, ou plus généralement les circuits intégrés à données secrètes, peuvent être équipés de fonctions de détection d'une tentative de fraude ou plus généralement de détection de paramètres incorrects, conduisant à la suspicion d'une tentative de fraude.

Le plus souvent, on cherche alors à bloquer le composant par l'exécution d'une instruction en boucle infinie. Un tel fonctionnement en boucle infinie est préféré à un arrêt pur et simple du composant, car cela permet de ne pas rendre la main à l'utilisateur et rend ainsi plus difficile l'analyse par un fraudeur.

Un inconvénient d'un fonctionnement en boucle infinie sur une instruction est que cela donne une indication au pirate sur le fait qu'il a bloqué le programme exécuté par le circuit intégré. En particulier, dans une analyse de la consommation, il est possible de détecter une instruction exécutée en boucle. Le pirate sait alors qu'il a touché une zone sensible du composant par son action. Il peut alors intervenir sur le compteur d'instructions pour forcer une sortie de la boucle, ce qui rend le composant particulièrement fragile.

Le document US-A-5 249 294 décrit un système de masquage de l'exécution d'un programme contre des attaques temporelles des boucles de durée variable.

La présente invention vise à pallier les inconvénients des actions classiques mises en oeuvre dans un circuit intégré suite à une détection d'une tentative de fraude ou analogue.

L'invention vise, plus particulièrement, à proposer une solution qui empêche au pirate éventuel de s'apercevoir que le composant a réagi suite à la détection de son intervention.

L'invention vise également à proposer une solution qui ne soit pas reproductible, c'est-à-dire qui se traduise par un comportement différent du circuit intégré à chaque tentative de fraude.

Pour atteindre ces objets et d'autres, la présente invention prévoit un procédé de blocage d'un circuit intégré suite à une détection d'une tentative d'accès non autorisée à des informations qu'il contient, comprenant les étapes suivantes :
exécuter un premier programme de génération d'un deuxième programme à exécuter dans une mémoire vive du circuit intégré, ledit deuxième programme comprenant plusieurs séquences d'instructions et chaque séquence se terminant par un branchement vers une autre séquence ; et
exécuter le deuxième programme.

Selon un mode de mise en oeuvre de la présente invention, on génère une table d'adresses de sauts (JUMP TABLE) en mémoire vive, les adresses des sauts étant distinctes deux à deux d'un nombre d'adresses prédéterminées ;
on place à l'adresse précédant une adresse de saut, une instruction de branchement sur une des adresses de la table des sauts ; et
on remplit les adresses intermédiaires par des instructions choisies aléatoirement dans un ensemble d'instructions prédéterminées.

Selon un mode de mise en oeuvre de la présente invention, la table des sauts est remplie de façon aléatoire à chaque génération du deuxième programme.

Selon un mode de mise en oeuvre de la présente invention, l'ensemble d'instructions prédéterminées ne contient pas d'instructions de branchement à une zone sensible du circuit intégré.

Selon un mode de mise en oeuvre de la présente invention, l'ensemble d'instructions prédéterminées ne contient pas d'instructions d'accès à la mémoire morte du circuit intégré et/ou pas d'instruction de saut ni d'arrêt.

Selon un mode de mise en oeuvre de la présente invention, les instructions de branchement du deuxième programme sélectionnent par tirage aléatoire une adresse dans la table des sauts.

Selon un mode de mise en oeuvre de la présente invention, on utilise un registre tampon pour stocker des données à traiter par les instructions aléatoires.

L'invention prévoit également un circuit intégré pourvu au moins d'une mémoire non-volatile et d'une mémoire volatile exécutable, et de moyens pour la mise en oeuvre du procédé de blocage.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 représente, de façon très schématique, un circuit intégré utilisable pour la mise en oeuvre de l'invention ;
la figure 2 représente un exemple d'architecture de la mémoire non volatile d'un circuit intégré selon la présente invention ; et
la figure 3 illustre, sous forme d'organigramme, un mode de mise en oeuvre du procédé de blocage d'un circuit intégré selon l'invention.

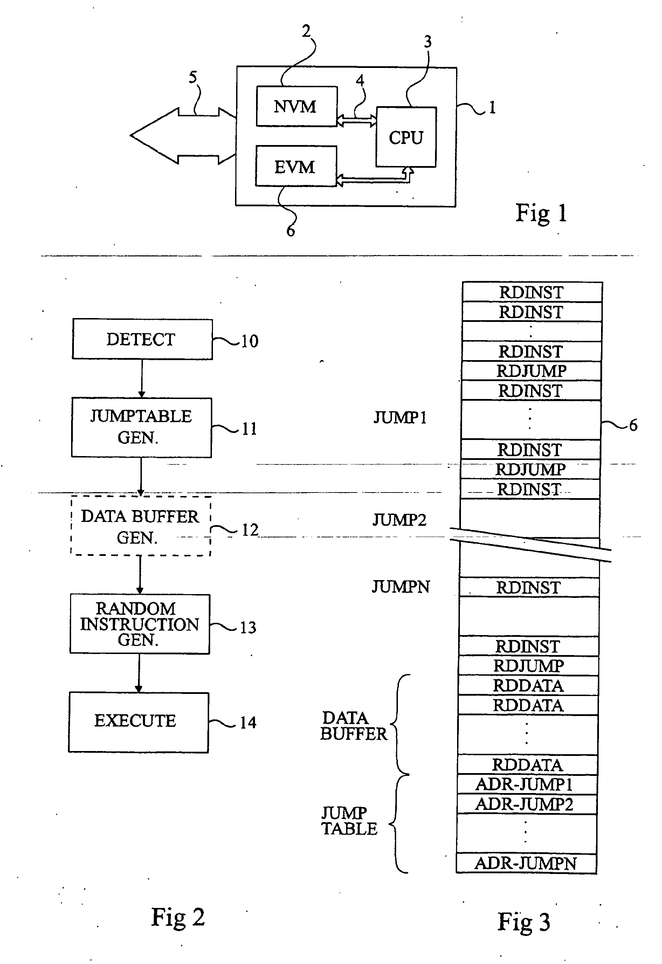

Pour des raisons de clarté, seuls les éléments du circuit et des étapes de procédé utiles à la compréhension de l'invention ont été représentés aux figures et seront décrits par la suite. En particulier, tous les constituants du circuit intégré n'ont pas été détaillés en figure 1.

Une caractéristique de la présente invention est de prévoir la génération d'un code programme aléatoire à chaque besoin de blocage d'un composant suite à une détection d'une tentative de violation de celui-ci.

La figure 1 représente, de façon partielle et très schématique, un exemple de circuit intégré 1 du type auquel peut s'appliquer la présente invention. Pour la mise en oeuvre de l'invention, le circuit intégré 1 comprend une mémoire non-volatile 2 (NVM) constituée, par exemple, d'une mémoire ROM, PROM, EEPROM, ou analogue. Le circuit 1 comprend également une unité centrale de traitement 3 (CPU) communiquant avec la mémoire 2 par un bus 4. Le circuit 1 communique avec l'extérieur au moyen d'un ou plusieurs bus 5. En figure 1, une seule liaison multifilaire a été représentée. On notera toutefois que cela signifie que tous les signaux de commande, de détection et de traitement transitent par ces fils. Les constituants décrits ci-dessus sont ceux équipant classiquement toute carte à puce.

Pour la mise en oeuvre de l'invention, le circuit intégré 1 comprend en outre une mémoire volatile exécutable 6 (EVM). Il s'agit, par exemple, d'une mémoire vive exécutable. Cette condition est indispensable pour que le programme généré pour bloquer le composant puisse s'exécuter sans recourir à la mémoire non volatile 2. Cette fonctionnalité est liée à la génération aléatoire du programme de blocage.

Le reste des constituants du circuit n'a pas été détaillé. Il s'agit de tous les constituants classiques liés à l'application de ce circuit.

La figure 2 représente, par un organigramme très simplifié, un mode de mise en oeuvre d'un procédé de blocage d'un composant selon la présente invention.

La figure 3 illustre la mise en oeuvre de ce procédé, par un exemple de contenu de la mémoire vive exécutable 6 suite à l'écriture, dans cette mémoire, d'instructions du programme de blocage de l'invention.

Le procédé s'initialise par une détection (bloc 10, DETECT) d'une tentative de violation du composant, ou plus généralement d'un fonctionnement anormal de celui-ci considéré comme devant conduire à son blocage. Cette détection est classique et ne fait pas l'objet de la présente invention.

L'étape suivante 11 (JUMP TABLE GEN) consiste à générer une table des sauts ou branchements (JUMP TABLE, figure 3) contenant des adresses disponibles de la mémoire vive. Le programme correspondant est contenu dans la mémoire non volatile et génère des adresses ADR-JUMPi (ADR-JUMP1, ADR-JUMP2, ..., ADR-JUMPN) de sauts choisies dans le reste de la mémoire vive. En pratique, toute la mémoire est disponible à l'exception de quelques registres spéciaux fonction de l'application de la carte à puce et des adresses contenant la table de sauts et l'éventuel registre tampon de travail qui sera décrit par la suite.

Les paramètres nécessaires à la génération de la table des sauts sont le nombre N de sauts à générer, la plage d'adresses disponibles pour ces sauts dans la mémoire vive exécutable et, le cas échéant, l'écart minimal (en nombre d'adresses) entre deux sauts successifs. Ces paramètres peuvent eux-mêmes être choisis aléatoirement à chaque exécution du programme de génération, dans une plage de valeurs autorisées prédéfinies.

La table de sauts (JUMP TABLE) est initialisée, par exemple, en fin de mémoire 6.

A chaque adresse précédant l'adresse d'un branchement correspondant à l'un des enregistrements de la table de sauts, le programme de génération insère une instruction (RD JUMP) de branchement sur la base d'une des adresses de la table des sauts. Soit la table des sauts contient directement des instructions de branchement sur une autre adresse de la mémoire, soit elle contient la valeur d'adresse constituant le paramètre de l'instruction de branchement RD JUMP rencontrée.

Le programme de génération du programme de blocage génère alors (étape 13, RANDOM INSTRUCTION GEN) des séquences d'instructions aléatoires RD INST. Ces instructions sont choisies aléatoirement, dans une liste d'instructions autorisées, et remplissent les adresses restées vides de la mémoire 6.

Les instructions RD INST sont donc choisies aléatoirement en évitant quelques instructions spécifiques qui supprimeraient le fonctionnement en boucle du programme de blocage. En particulier, on doit éviter les sauts, les arrêts, les écritures affectant la table des sauts, ainsi que les accès à la mémoire morte 2 dans des zones susceptibles de contenir des éléments critiques de l'algorithme ou de certaines données. Le plus simple est d'interdire toute instruction d'accès à la mémoire morte dans la sélection aléatoire des instructions possibles du programme de blocage.

De préférence, toutes les adresses libres de la mémoire 6 sont alors remplies par des instructions aléatoires de sorte qu'une fois le programme de génération terminé, aucune adresse ne soit libre.

Selon un mode de réalisation préféré, les instructions RD INST sont choisies parmi une liste d'instructions préétablie regroupant des instructions effectuées en temps normal par le programme applicatif de la carte à puce. Un tel mode de réalisation présente l'avantage que le programme mis en oeuvre lors du blocage ressemble le plus possible au programme normal du composant.

Enfin, on exécute (étape 14, EXECUTE) le programme que l'on vient d'enregistrer en mémoire 6. Par exemple, cette exécution démarre à la première adresse de la mémoire vive dans laquelle a été décrit le programme. En variante, on pourra choisir de démarrer l'exécution de programme de blocage à n'importe quelle adresse comprenant une instruction aléatoire RD INST ou une instruction de saut RD JUMP.

En option, on peut prévoir un registre tampon de travail (DATA BUFFER) dans une partie de la mémoire 6 pour contenir des données aléatoires (RD DATA) destinées à être utilisées par des algorithmes non critiques du point de vue de la sécurité et contenus dans la mémoire morte. Par exemple, on pourra exécuter un algorithme de cryptage contenu dans la mémoire non volatile sur la base de données aléatoires, pourvu que cet algorithme ne constitue pas un des éléments à protéger. On peut ainsi appeler n'importe quelle fonction non critique de la mémoire non volatile, ce qui rend le programme de blocage encore plus ressemblant au programme réel.

La génération du registre DATA BUFFER s'effectue dans une étape 12 (DATA BUFFER GEN) qui, par exemple, suit ou précède l'étape 11. Pour cette étape, les paramètres à connaître sont le nombre d'adresses de la mémoire vive à allouer au registre ainsi que la plage des données possibles.

La ligne de la table des sauts sur laquelle pointe chaque instruction RD JUMP est, par exemple, choisie aléatoirement parmi les lignes disponibles, c'est-à-dire non encore choisie pour une instruction RD JUMP précédente. On prévoit alors également, dans le programme de génération, de vérifier qu'une instruction RD JUMP ne pointe pas sur l'adresse qui suit l'instruction RD JUMP immédiatement précédente. Ceci afin d'éviter un fonctionnement du programme de blocage en boucle sur un seul jeu d'instructions.

Un avantage de la présente invention est qu'en générant un programme de façon aléatoire à chaque besoin de blocage du composant, son comportement n'est pas reproductible d'un blocage à l'autre. On empêche ainsi un pirate éventuel d'analyser les blocages successifs du composant pour accéder aux zones sensibles et/ou données secrètes.

Un autre avantage de la présente invention est qu'elle permet d'exécuter un programme de blocage qui soit le plus proche possible du programme applicatif de la carte à puce. On évite ainsi les inconvénients des programmes de blocage consistant à exécuter une simple instruction en boucle infinie.

Bien entendu, la présente invention est susceptible de diverses variantes et modifications qui apparaîtront à l'homme de l'art. En particulier, la réalisation pratique de l'invention est à la portée de l'homme du métier à partir des indications fonctionnelles données ci-dessus. Le choix du nombre de sauts prévus dans la table de l'invention dépend de l'application. Plus ce nombre est élevé, plus le comportement du programme sera voisin d'un fonctionnement réel. Toutefois, ce nombre est bien entendu limité par la taille de la mémoire vive exécutable.

De plus, le choix des instructions aléatoires et le recours à un registre tampon de travail et à des programmes contenus dans la mémoire morte est à la portée de l'homme du métier selon l'application.

## Revendications

1. Procédé de blocage d'un circuit intégré (1) suite à une détection d'une tentative d'accès non autorisée à des informations qu'il contient, comprenant les étapes suivantes :
exécuter un premier programme de génération d'un deuxième programme en générant une table d'adresses de sauts (JUMP TABLE) dans une mémoire vive (6) du circuit intégré, les adresses des sauts étant distinctes deux à deux d'un nombre d'adresses prédéterminées ; en plaçant à l'adresse précédant une adresse de saut, une instruction de branchement (RD JUMP) sur une des adresses de la table des sauts ; et en remplissant les adresses intermédiaires par des instructions (RD INST) choisies aléatoirement dans un ensemble d'instructions prédéterminées en évitant quelques instructions spécifiques qui supprimeraient le fonctionnement en boucle du deuxième programme, pour obtenir des séquences d'instructions telles que le deuxième programme comprenne plusieurs séquences d'instructions et que chaque séquence se termine par un branchement vers une autre séquence ; et
exécuter le deuxième programme.

2. Procédé selon la revendication 1, **caractérisé en ce que** la table des sauts (JUMP TABLE) est remplie de façon aléatoire à chaque génération du deuxième programme.

3. Procédé selon la revendication 1 ou 2, **caractérisé en ce que** l'ensemble d'instructions prédéterminées ne contient pas d'instructions de branchement à une zone sensible du circuit intégré (1).

4. Procédé selon l'une quelconque des revendications 1 à 3, **caractérisé en ce que** l'ensemble d'instructions prédéterminées ne contient pas d'instructions d'accès à la mémoire morte (2) du circuit intégré (1) et/ou pas d'instruction de saut ni d'arrêt.

5. Procédé selon l'une quelconque des revendications 1 à 4, **caractérisé en ce que** les instructions de branchement du deuxième programme sélectionnent par tirage aléatoire une adresse dans la table des sauts.

6. Procédé selon l'une quelconque des revendications 1 à 5, **caractérisé en ce qu'**il utilise un registre tampon (DATA BUFFER) pour stocker des données (RD DATA) à traiter par les instructions aléatoires (RD INST).

7. Circuit intégré (1) pourvu au moins d'une mémoire non-volatile (2) et d'une mémoire volatile exécutable (6), comportant des moyens (8) pour la mise en oeuvre du procédé selon l'une quelconque des revendications 1 à 6.

## Claims

1. A method for blocking an integrated circuit (1) after a detection of an attempt of unauthorized access to information that it contains, including the steps of:
executing a first program of generation of a second program by generating a jump address table (JUMP TABLE) in a random access memory (6) of the integrated circuit, the jump addresses being distinct two by two by a predetermined number of addresses; placing at the address preceding a jump address an instruction (RD JUMP) for branching on one of the addresses of the jump table; and filling the intermediary addresses of the table with instructions (RD INST) randomly chosen from a set of predetermined instructions, while avoiding some specific instructions that would suppress the loop operation of the second program, to obtain instruction sequences such that said second program includes several instruction sequences and each sequence ends with a branching to another sequence; and
executing the second program.

2. The method of claim 1, **characterized in that** the jump table (JUMP TABLE) is randomly filled upon each generation of the second program.

3. The method of claim 1 or 2, **characterized in that** the set of predetermined instructions contains no instruction of branching to a sensitive area of the integrated circuit (1).

4. The method of any of claims 1 to 3, **characterized in that** the set of predetermined instructions contains no instruction of access to the ROM (2) of the integrated circuit (1) and/or no jump or stop instruction.

5. The method of any of claims 1 to 4, **characterized in that** the branching instructions of the second program select by random drawing an address from the jump table.

6. The method of any of claims 1 to 5, **characterized in that** it uses a buffer (DATA BUFFER) to store data (RD DATA) to be processed by the random instructions (RD INST).

7. An integrated circuit (1) provided with at least one non-volatile memory (2) and with one executable volatile memory (6), including means (8) for implementing the method of any of claims 1 to 6.

## Patentansprüche

1. Ein Verfahren zum Blockieren einer integrierten Schaltung (1) nach einer Detektion von einem unautorisierten Zugriffsversuch auf Information, die sie enthält, einschließlich der folgenden Schritte:
Ausführen eines ersten Programms zur Erzeugung von einem zweiten Programm durch Erzeugen einer Sprungadresstabelle (JUMP TABLE) in einem Speicher mit wahlfreiem Zugriff (6) von der integrierten Schaltung, wobei sich jeweils zwei (two by two) Sprungadressen um eine vorher bestimmten Anzahl von Adressen unterscheiden; Platzieren an der Adresse, die einer Sprungadresse vorhergeht, eine Instruktion (RD JUMP) zum Verzweigen auf eine von den Adressen von der Sprungtabelle; und Füllen der dazwischenliegenden Adressen von der Tabelle mit Instruktionen (RD INST), die zufällig von einem Satz von vorherbestimmten Instruktionen gewählt werden, während einige spezielle Instruktionen vermieden werden, die den Schleifenbetrieb (loop operation) von dem zweiten Programm unterdrücken würden, um Instruktionssequenzen zu erlangen, derart, dass das zweite Programm mehrere Instruktionssequenzen beinhaltet und jede Sequenz mit einer Verzweigung zu einer anderen Sequenz endet; und
Ausführen des zweiten Programms

2. Verfahren nach Anspruch 1, **dadurch gekennzeichnet, dass** die Sprungtabelle (JUMP TABLE) zufällig gefüllt wird nach jeder Erzeugung von dem zweiten Programm.

3. Verfahren nach Anspruch 1 oder 2, **dadurch gekennzeichnet, dass** der Satz an vorherbestimmten Instruktionen keine Instruktion zum Verzweigen zu einem sensiblen bzw empfindlichen Gebiet von der integrierten Schaltung (1) enthält

4. Verfahren nach irgendeinem der Ansprüche 1 bis 3, **dadurch gekennzeichnet, dass** der Satz an vorherbestimmten Instruktionen keine Instruktion enthält zum Zugang bzw Zugriff auf das ROM (2) von der integrierten Schaltung (1) und/oder keine Sprung- oder Stoppinstruktion

5. Verfahren nach irgendeinem der Ansprüche 1 bis 4, **dadurch gekennzeichnet, dass** die Verzweigungsinstruktionen von dem zweiten Programm durch zufällige Auslosung eine Adresse von der Sprungtabelle wählen.

6. Verfahren nach irgendeinem der Ansprüche 1 bis 5, **dadurch gekennzeichnet dass** es einen Puffer (DATA BUFFER) zum Speichern von Daten (RD DATA), die durch die zufälligen Instruktionen (RD INST) zu verarbeiten sind, nutzt

7. Eine integrierte Schaltung (1), die versehen ist mit wenigstens einem nichtflüchtigen Speicher (2) und mit einem ausführbaren flüchtigen Speicher (6), die Mittel (8) zum Implementieren des Verfahrens nach irgendeinem der Ansprüche 1 bis 6 beinhaltet.
